# EUROPÄISCHE PATENTSCHRIFT

(11) **EP 3 762 249 B1**
(45) Veröffentlichungstag und Bekanntmachung des Hinweises auf die Patenterteilung: **02.09.2026**
(21) Anmeldenummer: 18819036.7
(22) Anmeldetag: 06.12.2018
(51) Int. Cl.: B60L 53/31, B60L 53/30

(54) **LADESÄULE FÜR ELEKTROFAHRZEUGE MIT LICHTSIGNALGEBUNG ZUR VISUELLEN KOMMUNIKATION EINES AKTUELLEN LADEZUSTANDS**
CHARGING COLUMN FOR MOTOR VEHICLES WITH LIGHT SIGNALING FUNCTION FOR VISUALLY COMMUNICATING A CURRENT CHARGING STATE
COLONNE DE RECHARGE POUR DES VÉHICULES ÉLECTRIQUES INTÉGRANT UNE SIGNALISATION LUMINEUSE POUR COMMUNIQUER VISUELLEMENT UN ÉTAT DE CHARGE INSTANTANÉ

(30) Priorität: 05.03.2018 DE 202018101221 U
(43) Veröffentlichungstag der Anmeldung: 13.01.2021
(73) Patentinhaber: Ionity GmbH, 81671 München (DE)
(72) Erfinder: MANCHIPP, Simon, London, Greater London EC2A4QS (GB)
(74) Vertreter: Grünecker Patent- und Rechtsanwälte PartG mbB
(86) Internationale Anmeldenummer: PCT/EP2018/083803
(87) Internationale Veröffentlichungsnummer: WO 2019/170269

(56) Entgegenhaltungen:
- EP-A1- 2 740 630
- US-B1- 9 180 783

## Beschreibung

Die vorliegende Erfindung bezieht sich auf eine Ladesäule, insbesondere für die Aufladung von Batterien von Elektrofahrzeugen wie Elektroautos und E-Bikes.

Seit vielen Jahrzehnten existiert ein dichtes Netz an Tankstellen, an welchen Fahrzeuge mit Verbrennungsmotor mit Kraftstoffen wie Benzin und Diesel betankt werden können. Mittlerweile nimmt jedoch die Anzahl an Elektrofahrzeugen wie Elektroautos und auch EBikes am gesamten Verkehrsaufkommen vor allem innerhalb von größeren Städten und Ballungsgebieten immer mehr zu. Zum Aufladen der Batterien dieser Elektrofahrzeuge wurden in vielen Städten von unterschiedlichen Betreibern typischerweise auf Parkplätzen und in Parkhäusern Ladesäulen installiert. Während sich ein Elektrofahrzeug in Betriebsruhe befindet, kann seine Batterie an diesen Ladesäulen aufgeladen werden. Obwohl der Ladevorgang einer Batterie eines Elektrofahrzeugs nach wie vor wesentlich länger als das wenige Minuten dauernde Auftanken eines Fahrzeugs mit Verbrennungsmotor benötigt, werden heutzutage von modernen öffentlichen Ladesäulen bereits Ladezeiten von lediglich 20 - 30 Minuten erreicht. Es ist zudem davon auszugehen, dass in naher Zukunft noch wesentlich kürzere Ladezeiten von modernen öffentlichen Ladesäulen erreicht werden und dass die Elektromotorisierung der privaten und öffentlichen Fahrzeugflotte immer mehr zunehmen wird.

Für einen Benutzer eines Elektrofahrzeugs wäre es nun vorteilhaft, wenn er diese Ladezeiten effektiv mit anderen Tätigkeiten wie beispielsweise Einkäufen oder Erledigungen in der näheren Umgebung einer Ladesäule nutzen könnte, und dabei gleichzeitig Jederzeit einen aktuellen Ladezustand und vor allem den erfolgreichen Abschluss des Ladevorgangs der Batterie seines Elektrofahrzeugs im Auge behalten könnte. Durch die kontinuierliche Anzeige des Ladefortschritts kann ein Benutzer dann auch jederzeit seine anderweitigen Tätigkeiten oder Beschäftigungen an den jeweils erreichten aktuellen Ladezustand seines Elektrofahrzeugs anpassen. So könnte vermieden werden, dass ein Elektrofahrzeug trotz erfolgter Aufladung noch über einen längeren Zeitraum an einer Ladesäule geparkt wird und somit die Aufladung der Batterie eines zweiten Elektrofahrzeugs verhindert. Gleichzeitig wäre es für ein Kontrollorgan wie beispielsweise die Polizei einfacher, Strafzettel aufgrund von unnötigem Blockieren einer Ladesäule zu vergeben. Dadurch könnte eine wesentlich effizientere Nutzung und Auslastung der Ladesäule erreicht werden.

Dies ist insbesondere auch deshalb von großer Bedeutung, da die Anzahl an Elektrofahrzeugen am gesamten Verkehrsaufkommen in naher Zukunft aller Voraussicht nach noch erheblich zunehmen wird. Sobald die Anzahl an Elektrofahrzeugen einen großen Anteil am gesamten Verkehrsaufkommen haben, kann ein geordneter Verkehrsfluss jedoch nur aufrechterhalten werden, wenn einem Benutzer eines Elektrofahrzeugs auf einfache Art und Weise signalisiert wird, wo er momentan freie Ladesäulen zum Aufladen der Batterie seines Elektrofahrzeugs finden kann. Momentan wurde für dieses Problem noch keine zufriedenstellende Lösung gefunden. Einzelne Anbieter bieten die Möglichkeit an, mit einer Applikation für ein Smartphone, Tablet, etc. eine freie Ladesäule in näherer Umgebung von der momentanen Position zu finden. Allerdings muss der Benutzer eines Elektrofahrzeugs zur straßenverkehrsordnungskonformen Verwendung einer derartigen Applikation eine Fahrtunterbrechung einlegen. Folglich wäre es von Vorteil, wenn der Benutzer eines Elektrofahrzeugs direkt eine momentan freie Ladesäule aufgrund einer bestimmten Lichtsignalgebung aus weiterer Entfernung wahrnehmen und dann direkt ansteuern könnte und somit eine Fahrtunterbrechung zur Verwendung einer Smartphone-Applikation vermeiden könnte.

Die bisher an öffentlichen Ladesäulen angebrachten Kontrollleuchten erlauben es jedoch nicht, den aktuellen Ladezustand der Batterie eines Elektrofahrzeugs in Entfernungen von mehr als nur einigen Metern von der Ladesäule zu erkennen. Einerseits sind diese Kontrollleuchten generell lichtschwach und auch flächenmassig beschränkt, und zum anderen ermöglichen sie ein Ablesen nur für den Fall, dass sich der Benutzer unmittelbar vor der entsprechenden Kontrollanzeige befindet. Der Erfindung liegt somit die Aufgabe zugrunde, eine Ladesäule bereitzustellen, welche es erlaubt, den aktuellen Ladezustand der Batterie eines Elektrofahrzeugs, welche an der Ladesäule aufgeladen wird, über größere Entfernungen wie beispielsweise von mindestens zehn Metern komfortabel erkennen zu können. Eine gattungsgemäße Ladesäule ist aus US 9180783 B1 bekannt.

Diese Aufgabe wird durch die Merkmale des Anspruchs 1 gelöst.

Die Unteransprüche enthalten weitere vorteilhafte Ausführungsformen der Erfindung.

Gemäß der erfindungsgemäßen Ausgestaltung der Ladesäule wird der aktuelle Ladezustand der Batterie eines Elektrofahrzeugs durch eine als geschlossenes Lichtband ausgestaltete Lichtquelle visuell kommuniziert. Dieses geschlossene Lichtband ist
vorzugsweise im oberen Bereich der Ladesäule parallel zum Boden entlang der Mantelfläche oder unter Verwendung einer Halterung über der Ladesäule angebracht. Dabei ist das auf der Ladesäule angebrachte geschlossene Lichtband der typischerweise runden oder quadratischen Form einer horizontalen Querschnittsfläche der Ladesäule angepasst und ragt vorzugsweise über die rechteckige, quadratische, runde oder ovale Querschnittsfläche der Ladesäule hinaus. Gleichzeitig ist eine bevorzugte Abstrahlrichtung des geschlossenen Lichtbands nach unten auf die Ladesäule hingerichtet. Somit kann zum einen eine Lichtverschmutzung der Umgebung, welche von Anwohnern und Passanten als störend empfunden wird, verringert werden. Zum anderen kann durch eine Abstrahlung des Lichts der Lichtquelle in Richtung der Ladesäule eine Wirkung des Lichts nochmal signifikant verstärkt werden, indem die Ladesäule selbst als Reflektor genutzt wird. Erfindungsgemäß ist die äußere
Schicht der Ladesäule in hellem, reflektierenden Material wie beispielsweise weißem Lack gehalten, so dass ein von der im oberen Bereich oder über der Ladesäule angebrachten Lichtquelle abgegebenes Lichtsignal an der Ladesäule reflektiert wird und dadurch für einen weiter entfernten Betrachter noch besser erkennbar ist, als wenn das Lichtsignal lediglich von der primären Lichtquelle ausgeht.

Das geschlossene Lichtband der Ladesäule gibt nun vorzugsweise ganz umlaufendes Licht ab. Ebenso kann das geschlossene Lichtband der Ladesäule jedoch so ausgestaltet sein, dass es konstantes oder blinkendes Licht abgibt. Dabei ist auch die Farbe des von dem geschlossenen Lichtband abgegebenen Lichts beliebig einstellbar und veränderbar. Dies ermöglicht es dann, einen erfolgreichen Abschluss des Ladevorgangs der Batterie eines Elektrofahrzeugs, welches an der Ladesäule aufgeladen wird, beispielsweise durch einen Farbwechsel von weißem, umlaufend zu grünem, konstanten Licht zu visualisieren. Ebenso ist es vorstellbar, das Auftreten von technischen Problemen während des Ladevorgangs durch einen Farbwechsel von weißem zu rotem Licht kenntlich zu machen und/oder gleichzeitig durch eine Erhöhung der Blink- oder Umlauffrequenz. Weiterhin kann auch die Umlaufgeschwindigkeit, mit der das Licht im geschlossenen Lichtband umläuft, eine Blinkfrequenz, mit der das geschlossene Lichtband blinkt, und/oder eine Lichtstärke, mit der das Licht abgegeben wird, in Abhängigkeit des aktuellen Ladezustands der Batterie des Elektrofahrzeugs erhöht oder erniedrigt werden.

Die Ladesäule kann zudem eine dünne Lichtleiste aufweisen, welche an einer Außenseite der Ladesäule in vertikaler Richtung angebracht ist, und den aktuellen Ladezustand einer Batterie eines Elektrofahrzeugs, welches an der Ladesäule aufgeladen wird, durch Lichtabgabe entlang eines bestimmten Bruchteils ihrer Länge angibt. Ein erfolgreicher Abschluss des Ladevorgangs der Batterie des Elektrofahrzeugs wird dann durch Lichtabgabe entlang der kompletten Länge der Lichtleiste angezeigt. Allerdings kann eine derartige dünne Lichtleiste nur im Nahbereich von maximal 10 Metern Entfernung um die Ladesäule und auch nur von einer Seite aus betrachtet abgelesen werden. Folglich kann eine derartige dünne Lichtleiste alleine nicht dazu verwendet werden, den aktuellen Ladezustand einer Batterie eines Elektrofahrzeugs, welches an einer Ladesäule aufgeladen wird, für einen Betrachter, welcher sich in beliebiger Richtung weiter entfernt von der Ladesäule aufhält, deutlich zu machen.

Weiterhin ist vorzugsweise auf der Ladesäule ein Human-Machine Interface (HMI) angebracht, weiches vorzugsweise ein Mittel zum bargeldlosen Abwickeln des Bezahlvorgangs und/oder zum Abspielen von Werbebotschaften auf dem im HMI integrierten Bildschirm darstellt.

Zudem kann eine Ladesäule auch so ausgestaltet sein, dass sie das gleichzeitige Aufladen von zwei Batterien von zwei Elektrofahrzeugen erlaubt. Eine derartige Ladesäule weist folglich zwei Ladekabel, zwei HMIs, zwei Leuchtleisten und vor allem auch zwei getrennte, geschlossene Lichtbänder auf, welche dann die aktuellen Ladezustände der beiden an der Ladesäule ladenden Batterien in zwei unterschiedlichen Farben gleichmäßig in alle Richtungen über größere Entfernungsradien visuell kommunizieren.

Ein weiterer Nachteil von öffentlichen Ladesäulen für Elektrofahrzeuge besteht momentan darin, dass diese Ladesäulen häufig beliebig auf Parkplätzen, in Parkgaragen oder an Straßenrändern verteilt sind und von einem Benutzer eines Elektrofahrzeugs daher schwer aufzufinden sind.

Es wäre somit vorteilhaft, Ladesäulen in ähnlicher Weise wie bei herkömmlichen Benzin oder Dieselzapfsäulen in einem Verbund von Ladesäulen zusammenzuschließen und somit eine gewisse Vereinheitlichung und Auffindbarkeit zu gewährleisten.

Dieses Problem wird durch die Bereitstellung einer Stromtankstelle gelöst, die aus den erfindungsgemäßen Ladesäulen für Batterien von Elektrofahrzeugen aufgebaut ist.

Bevorzugte Ausführungsbeispiele der Erfindung werden nachfolgend anhand der Zeichnungen näher erläutert. Es zeigen:
Figur 1 eine perspektivische Darstellung einer nicht beanspruchten Ausführungsform der Ladesäule,
Figur 2 eine vergrößerte Darstellung eines HMI zur Verwendung in Ausführungsformen der Ladesäule,
Figur 3 eine Draufsicht der nicht beanspruchten Ausführungsform der Ladesäule gemäß Figur 1,
Figur 4 eine alternative, nicht beanspruchte Ausführungsform der Ladesäule,
Figur 5 eine Ladesäule in Ausführungsform gemäß Figur 1 während der visuellen Kommunikation eines aktuellen Ladezustands,
Figur 6 zwei Ladesäulen in verschiedener, nicht beanspruchter Ausführungsform zum zeitgleichen Aufladen von zwei Batterien zweier Elektrofahrzeuge,
Figur 7 eine "Stromtankstelle", welche aus einer Vielzahl der beschriebenen Ladesäulen besteht.

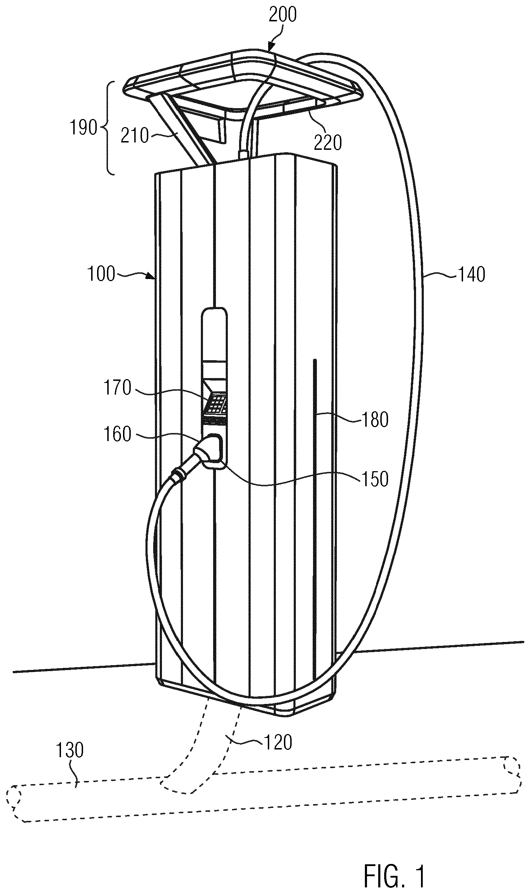

Figur 1 zeigt eine perspektivische Darstellung einer nicht beanspruchten Ausführungsform der Ladesäule (100) zum Aufladen von Batterien, welche in Elektrofahrzeugen wie insbesondere Elektroautos und E-Bikes verbaut sind. Die Ladesäule (100) hat eine rechteckige oder runde Grundform und ihre äußere Schicht besteht aus Kunststoff oder aus Metall wie beispielsweise Aluminium oder Stahl. Dabei ist die Lackierung der äußeren Schicht der Ladesäule matt oder alternativ hell und reflektierend. Die Ladesäule (100) bezieht ihre elektrische Ladung vorzugsweise über einen Starkstromanschluss (120) an der Unterseite, durch welchen Starkstrom aus dem öffentlichen Stromnetz (130) in sogenannte Power Units und von dort in die Ladesäule (100) eingeleitet wird.

In einem aufgebauten Zustand tritt auf der Oberseite der Ladesäule (100) ein Ladekabel (140) zum Aufladen von Batterien von Elektrofahrzeugen aus, welches am anderen Ende mittels eines Steckers (150) mit einem flexiblen Steckanschluss (160) auf einer Außenseite der Ladesäule (100) verbunden ist.

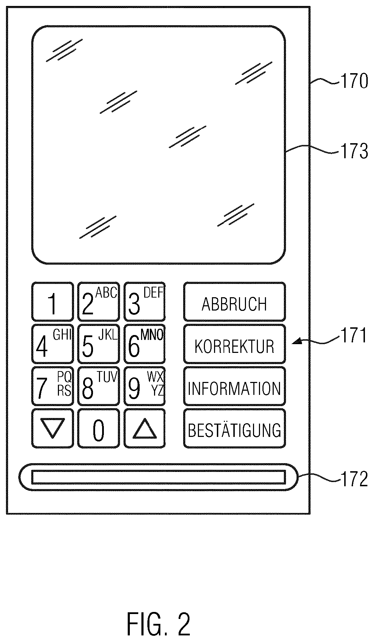

In Figur 1 ist zudem zu sehen, dass auf einer Außenseite der Ladesäule (100) ein HumanMachine Interface (HMI) (170) angebracht ist. Wie Figur 2, welche dieses HMI (170) in vergrößerter Darstellung zeigt, verdeutlicht, umfasst das HMI (170) eine Tastatur (171), ein Kartenlesegerät (172), sowie einen Bildschirm (173). Alternativ kann der Bildschirm (173) auch als Touchscreen ausgestaltet sein, wodurch dann die Notwendigkeit einer separaten Tastatur (171) im HMI (170) entfällt. Weiterhin kann auch dann auf eine separate Tastatur (171) im HMI (170) verzichtet werden, wenn der Bildschirm (173) mit zusätzlichen, am Rand angebrachten Bedienungsknöpfen ausgestattet ist. Im Kontext der vorliegenden Ladesäule (100) ist das HMI (170) vorzugsweise ein Mittel zum bargeldlosen Abwickeln eines Bezahlvorgangs für den aus der Ladesäule (100) entnommenen Ladestrom für die Batterie eines Elektrofahrzeugs. Dabei ist der Bildschirm (173) ein Mittel zur Darstellung von Eingabeaufforderungen, das Kartenlesegerät (172) ein Mittel zum Auslesen der Bankverbindung aus einer Kredit- oder Bankkarte und die Tastatur (171) ein Eingabegerät für eine Geheimzahl und eine Bestätigung des Bezahlvorgangs. Im Falle der Ausgestaltung des Bildschirms (173) als Touchscreen kann eine Eingabe einer Geheimzahl sowie eine Bestätigung des Bezahlvorgangs direkt durch Berühren des Bildschirms (173) erfolgen. Das Kartenlesegerät (172) kann hierbei einen Eingabeschlitz für eine Kredit- oder Bankkarte und/oder ein RFID Lesegerät, mit welcher die Kredit- oder Bankkarte lediglich in Berührung gebracht werden muss, umfassen.

Der Bildschirm des HMI (170) stellt zusätzlich zur bargeldlosen Abwicklung eines Bezahlvorgangs auch ein Mittel zum Abspielen von Werbebotschaften wie beispielsweise Werbespots für den Betreiber der Ladesäule (100) dar.

In Figur 1 ist zudem zu erkennen, dass an einer Außenseite der Ladesäule (100) in vertikaler Richtung eine dünne Lichtleiste (180) angebracht ist. Diese dünne Lichtleiste (180) ist eine Kontrollanzeige, welche einen aktuellen Ladezustand einer Batterie eines Elektrofahrzeugs, welches an der Ladesäule (100) aufgeladen wird, wiedergibt. Entsprechend dem aktuellen Ladezustand der Batterie des Elektrofahrzeugs gibt die Lichtleiste (180) Licht über einen bestimmten Bruchteil ihrer Länge ab. Je niedriger der Ladezustand der Batterie des Elektrofahrzeugs ist, desto geringer ist der Bruchteil der gesamten Länge der Lichtleiste (180), welcher Licht abstrahlt. Dabei nimmt der Bruchteil der Länge der Lichtleiste (180), welcher Licht abstrahlt, mit zunehmender Ladung der Batterie von unten nach oben zu. Ein erfolgreicher Abschluss des Ladevorgangs der Batterie des Elektrofahrzeugs wird dabei durch eine Lichtabgabe entlang der kompletten Länge der Lichtleiste (180) angezeigt.

Der von der dünnen, vertikalen Lichtleiste (180) angezeigte aktuelle Ladezustand der Batterie des Elektrofahrzeugs ist jedoch nur in einem Nahbereich von wenigen Metern Entfernung von der entsprechenden Außenseite der Ladesäule (100), an welcher die Lichtleiste (180) angebracht ist, ablesbar. Folglich stellt die dünne, vertikale Lichtleiste (180) kein Mittel dar, welches dazu geeignet ist, den aktuellen Ladezustand der Batterie eines Elektrofahrzeugs, welches an einer Ladesäule (100) aufgeladen wird, auch noch in weiterem Abstand von der Ladesäule (100) abzulesen. Da Jedoch das Aufladen der Batterie eines Elektrofahrzeugs eine gewisse Zeitdauer benötigt, entfernt sich ein Benutzer des Elektrofahrzeugs typischerweise von dem Elektrofahrzeug, um während der Zeitdauer des Ladevorgangs anderen Tätigkeiten nachzugehen. Deshalb ist es wünschenswert, dass der aktuelle Ladezustand und insbesondere das komplette Aufladen der Batterie des Elektrofahrzeugs auch noch von einem der Ladesäule (100) benachbarten Gebäude aus oder von einer der Ladesäule (100) gegenüberliegenden Straßenseite aus problemlos erkannt werden kann.

Wie Figur 1 zeigt, wird in einer Ausführungsform der Ladesäule (100) eine visuelle Kommunikation des aktuellen Ladezustands der Batterie eines Elektrofahrzeugs über größere Entfernungsradien von mindestens zehn Metern um die Ladesäule (100) durch eine mittels einer Halterung (190) auf der Oberseite der Ladesäule (100) angebrachten lichtstarken Lichtquelle (200) erreicht. Eine derartige Lichtquelle (200) weist vorzugsweise eine Lichtstärke von mehreren hundert Candela auf, so dass das von ihr abgestrahlte Licht auch in mehr als zehn Metern Entfernung von der Ladesäule (100) noch problemlos wahrgenommen werden kann. Zudem erfolgt die Abstrahlung des Lichts von der auf der Oberseite der Ladesäule (100) angebrachten lichtstarken Lichtquelle (200) gleichmäßig in alle Richtungen.

Dabei ist die lichtstarke Lichtquelle (200) der Ladesäule (100) bevorzugt als ein geschlossenes Lichtband (200) ausgestaltet und ist durch die Halterung (190) auf der Oberseite der Ladesäule (100) in einer Ebene parallel zum Boden ausgerichtet. Die Halterung (190) besteht dabei aus einem Haltebügel (210) und einer daran in einem Winkel von ca. 45 Grad angebrachten Führung (220), welche parallel zur Oberseite der Ladesäule (100) verläuft und an welcher das geschlossene Lichtband (200) angebracht ist. Der Haltebügel (210) ist an seinem oberen Ende an zwei Stellen mit der Führung (220) des geschlossenen Lichtbands (200) verbunden, und an seinem unteren Ende mit der Oberseite der Ladesäule (100).

In der Ausführungsform der Ladesäule (100) ist die Führung (220) und damit das an der Führung (220) angebrachte geschlossene Lichtband (200) der Form der horizontalen Querschnittsfläche der Ladesäule (100) angepasst, ragt jedoch über diese in radialer Richtung hinaus. Typischerweise ist die horizontale Querschnittsfläche der Ladesäule (100) rund oder quadratisch gehalten. Zudem weist das an der Führung (220) der Halterung (210) angebrachte geschlossene Lichtband (200) eine Öffnung in der Mitte auf, durch welche das auf der Oberseite der Ladesäule (100) austretende Ladekabel (140) geführt wird.

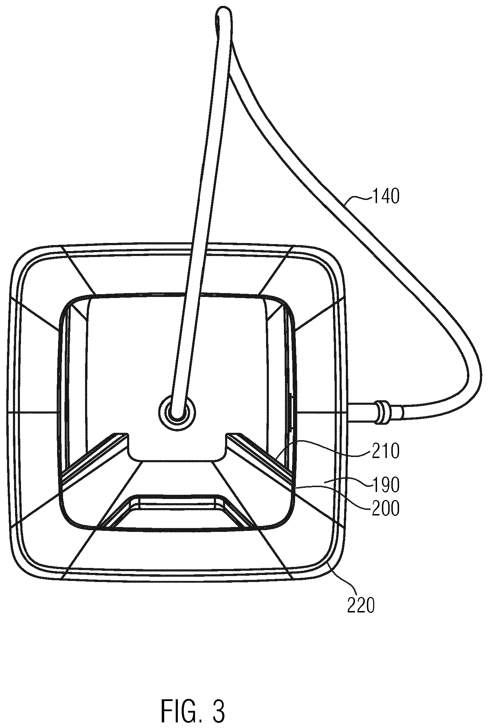

Figur 3 zeigt eine Draufsicht auf die Ladesäule (100) aus der Vogelperspektive. Diese Ansicht der Ladesäule (100) verdeutlicht die Ausgestaltung der auf der Oberseite der Ladesäule (100) mittels einer Halterung (190) angebrachten Lichtquelle (200) als geschlossenes Lichtband (200), welches der Form der horizontalen Querschnittsfläche der Ladesäule (100) entspricht, und dabei gleichzeitig radial in alle Richtungen über die Ladesäule (100) hinausragt. Das geschlossene Lichtband (200) weist folglich einen größeren Durchmesser als die Ladesäule (100) auf. Weiterhin ist in Figur 3 sehr deutlich zu erkennen, dass das geschlossene Lichtband (200) in der Mitte eine Öffnung aufweist, durch welche das auf der Oberseite der Ladesäule (100) austretende Ladekabel (140) geführt wird.

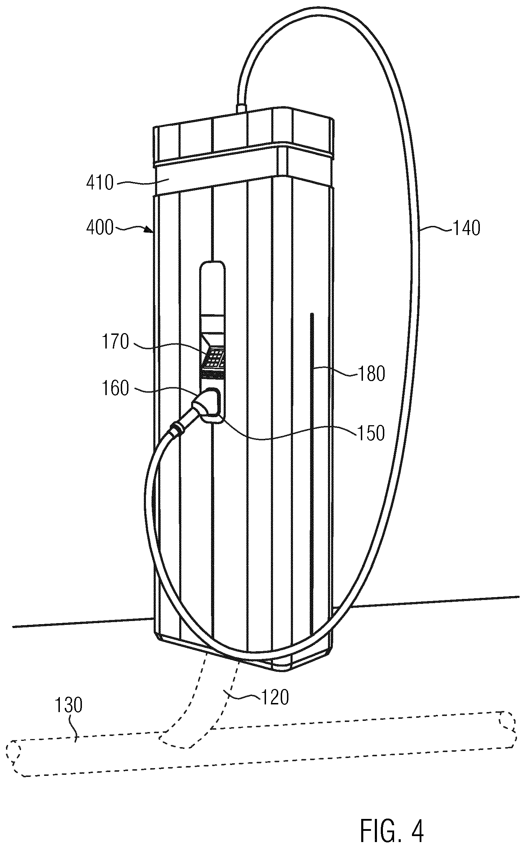

Figur 4 zeigt eine alternative Ausführungsform der Ladesäule (400), in welcher die Lichtquelle (200) ebenfalls als geschlossenes Lichtband (410) ausgestaltet ist, aber anstatt mittels einer Halterung (190) auf der Oberseite der Ladesäule (100) direkt außen entlang der Mantelfläche der Ladesäule (400) in einer Ebene parallel zum Boden angebracht ist. Dabei erstreckt sich das geschlossen Lichtband (410) der Lichtquelle (200) in einem Streifen parallel zum Boden über alle Außenseiten der Ladesäule (400), wodurch eine gleichmäßige Lichtabgabe in alle Richtungen gewährleistet ist.

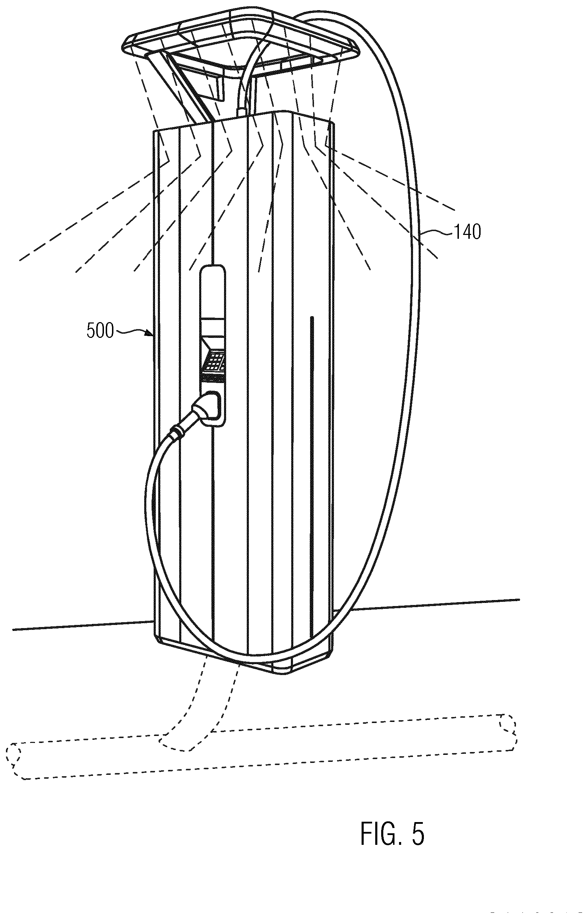

Wie in Figur 5 zu sehen ist, ist das geschlossene Lichtband (200, 410), weiches mittels einer Halterung (190) auf der Oberseite der Ladesäule (100) oder alternativ außen im oberen Bereich der Ladesäule (400) angebracht ist, bevorzugt so ausgestaltet, dass eine Lichtabstrahlung nach oben möglichst vermieden oder zumindest minimiert wird. Dadurch soll eine Lichtbelästigung von Verkehr, Anwohnern und Passanten in einer unmittelbaren Umgebung der Ladesäule (100, 400) möglichst geringgehalten werden. Eine bevorzugte Abstrahlrichtung des geschlossenen Lichtbands (200,410) ist dabei nach unten in Richtung der Ladesäule (100, 400). ist nämlich die Ladesäule (100, 400) in hellem, reflektierendem Material gehalten, verstärkt die Reflexion des von dem geschlossenen Lichtband (200, 410) abgegebenen Lichts an der Ladesäule (100, 400) die Wirkung des geschlossenen Lichtbands (200, 410) maßgeblich, so dass eine visuelle Kommunikation des aktuellen Ladezustands einer Batterie eines Elektrofahrzeugs, welche an der Ladesäule (100, 400) aufgeladen wird, über eine weitere Strecke erfolgen kann, als wenn der aktuelle Ladezustand nur durch das von dem geschlossenen Lichtband (200, 410) direkt abgestrahlte Licht visuell kommuniziert wird.

Die Farbe des von dem geschlossenen Lichtband (200, 410) der Ladesäule (100, 400) abgegebenen Lichts ist dabei frei einstellbar und auch veränderbar. Vorzugsweise kann die Farbe des von dem geschlossenen Lichtband (200, 410) der Ladesäule (100,400) abgestrahlten Lichts der charakteristischen Farbe des jeweiligen Betreibers der Ladesäule (100, 400) entsprechen.

Das geschlossene Lichtband (200, 410) der Ladesäule (100, 400) kann konstantes Licht abgeben oder alternativ auch Licht, welches mit einer bestimmten Umlaufgeschwindigkeit im geschlossenen Lichtband (200, 410) umläuft. Alternativ kann das geschlossene Lichtband (200, 410) auch Licht in bestimmten, kurzen, regelmäßigen Intervallen abgeben, welche sich mit Intervallen, während denen kein Licht abgestrahlt wird, abwechseln. Dadurch wird ein Blinken der Lichtquelle (200) mit einer bestimmten, festen Blinkfrequenz erzeugt.

Durch die oben beschriebene Reflexion des von dem geschlossenen Lichtband (200, 410) abgestrahlten Lichts an der Ladesäule (100, 400) wird erreicht, dass auch eine bestimmte Blinkfrequenz beziehungsweise alternativ eine bestimmte Umlaufgeschwindigkeit des Lichts in einer weiteren Entfernung um die Ladesäule (100, 400) herum noch sehr gut wahrnehmbar ist.

Die beschriebene Umlaufgeschwindigkeit des Lichts im geschlossenen Lichtband (200, 410) der Ladesäule (100, 400) oder alternativ die erwähnte Blinkfrequenz des vom geschlossenen Lichtband (200, 410) abgestrahlten Lichts kann nun in Abhängigkeit eines aktuellen Ladezustands einer an der Ladesäule (100,400) aufzuladenden Batterie eines Elektrofahrzeugs erhöht oder erniedrigt werden.

So kann beispielsweise ein sehr niedriger aktueller Ladezustand einer Batterie eines Elektrofahrzeugs, welche gegenwärtig an einer Ladesäule (100, 400) aufgeladen wird, von weniger als 10% durch eine sehr langsame Umlaufgeschwindigkeit des Lichts im geschlossenen Lichtband (200, 410) oder alternativ durch eine sehr niedrige Blinkfrequenz visuell kommuniziert werden. Erreicht der aktuelle Ladezustand der Batterie des Elektrofahrzeugs, welches gegenwärtig an der Ladesäule (100, 400) aufgeladen wird, einen Mindestwert von zum Beispiel 10%, kann die Umlaufgeschwindigkeit des Lichts im geschlossenen Lichtband (200,410) oder alternativ die Blinkfrequenz des geschlossenen Lichtbands (200, 410) um einen festen Wert erhöht werden. In gleicher Weise können die Umlaufgeschwindigkeit beziehungsweise alternativ die Blinkfrequenz des geschlossenen Lichtbands (200, 410) wiederum erhöht werden, wenn der aktuelle Ladezustand der Batterie des Elektrofahrzeugs einen zweiten Mindestwert von 25%, einen dritten Mindestwert von 50% und einen vierten Mindestwert von 75% der kompletten Ladung erreicht. Alternativ können die Umlaufgeschwindigkeit des Lichts beziehungsweise die Blinkfrequenz im geschlossenen Lichtband (200, 410) auch jeweils beim Erreichen anderer Mindestwerte des aktuellen Ladezustands der Batterie eines Elektrofahrzeugs erhöht werden. Zudem können weiterhin beliebig viele derartige Mindestwerte implementiert werden, bei deren Erreichen sich eine Umlaufgeschwindigkeit des Lichts beziehungsweise eine Blinkfrequenz des Lichts im geschlossenen Lichtband (200, 410) der Ladesäule (100, 400) ändert, so dass im Extremfall eine nahezu laufende Erhöhung der Umlaufgeschwindigkeit beziehungsweise der Blinkfrequenz als Funktion des aktuellen Ladezustands stattfinden kann.

Weiterhin kann auch ein leerer Ladezustand der Batterie eines Elektrofahrzeugs, welches an einer Ladesäule (100, 400) aufgeladen werden soll, durch eine erste, höchste Umlaufgeschwindigkeit des Lichts im geschlossenen Lichtband (200, 410) als auch alternativ durch eine erste, höchste Blinkfrequenz des Lichts im geschlossenen Lichtbands (200, 410) repräsentiert werden, welche dann im weiteren Verlauf des Ladevorgangs beim Erreichen bestimmter Mindestwerte des aktuellen Ladezustands der Batterie des Elektrofahrzeugs Jeweils erniedrigt werden.

Alternativ kann auch die Lichtstärke des von dem geschlossenen Lichtband (200, 410) abgestrahlten Lichts als Funktion des aktuellen Ladezustands einer an der Ladesäule (100, 400) ladenden Batterie eines Elektrofahrzeugs bei Erreichen von vorher festgelegten Mindestwerten des Ladungszustands der Batterie erhöht werden. Dabei können in gleicher Weise wie bei den oben beschriebenen Änderungen der Umlaufgeschwindigkeit des Lichts im geschlossenen Lichtband (200, 410) beziehungsweise der Änderung der Blinkfrequenz des vom geschlossenen Lichtband (200,410) abgestrahlten Lichts beliebig viele Mindestwerte des aktuellen Ladezustands der Batterie eines Elektrofahrzeugs festgelegt werden, bei deren Erreichen sich die Lichtstärke des von der Lichtquelle (200) abgegebenen Lichts erhöht. **Im** Grenzfall ist somit auch eine nahezu konstante Erhöhung der Lichtstärke des von dem geschlossenen Lichtband (200, 410) abgegebenen Lichts in Abhängigkeit des aktuellen Ladezustands einer von der Ladesäule (100,400) aufzuladenden Batterie eines Elektrofahrzeugs möglich.

Ein erfolgreicher Abschluss des Ladevorgangs der Batterie eines Elektrofahrzeugs kann in der vorliegenden Erfindung beispielsweise durch einen gleichmäßigen, konstanten Leuchtzustand des geschlossenen Lichtbands (200, 410) dargestellt werden, welcher auch in großer Entfernung von der Ladesäule (100, 400) noch sehr gut von einem umlaufenden Licht oder alternativ einem Blinklicht unterschieden werden kann. Somit kann einem Benutzer auch über weite Entfernungen eindeutig visuell signalisiert werden, dass der Ladevorgang der Batterie seines Elektrofahrzeugs erfolgreich abgeschlossen ist. Alternativ kann ein erfolgreicher Abschluss des Ladevorgangs der Batterie eines Elektrofahrzeugs, welches an einer Ladesäule (100, 400) aufgeladen wird, auch durch einen Farbwechsel des von dem geschlossenen Lichtband (200, 410) der Ladesäule (100, 400) abgegebenen Lichts visuell kommuniziert werden. Wurde während des Ladevorgangs beispielsweise rotes Licht von dem geschlossenen Lichtband (200, 410) der Ladesäule (100, 400) abgestrahlt, kann der erfolgreiche Abschluss des Ladevorgangs an der Ladesäule (100, 400) durch das Abstrahlen von grünem Licht signalisiert werden. Selbstverständlich sind die genannten Farbtöne lediglich Beispiele, und das Licht des geschlossenen Lichtbands (200, 410) der Ladesäule (100, 400) kann alle möglichen denkbaren und existierenden Farbtöne annehmen.

Ebenso ist es auch denkbar, dass das Auftreten von technischen Problemen während des Ladevorgangs durch einen Farbwechsel und/oder eine Änderung der Umlauffrequenz oder Blinkfrequenz des geschlossenen Lichtbands kenntlich gemacht wird. Beispielsweise könnte ein plötzlich auftretendes technisches Problem, welches eine Fortsetzung des Aufladevorgangs verhindert, durch eine erhöhte Umlauf- oder Blinkfrequenz und einen Wechsel von rotem zu blauem Licht signalisiert werden.

Das an oder alternativ über der Ladesäule (100, 400) angebrachte geschlossene Lichtband (200, 410) kann weiterhin auch alle oben beschriebenen Merkmale zur visuellen Kommunikation eines aktuellen Ladezustands einer Batterie eines Elektrofahrzeugs wie Erhöhung der Lichtstärke, Ändern der Umlaufgeschwindigkeit und der Blinkfrequenz des Lichts im geschlossenen Lichtband (200, 410), sowie Ändern des Farbtons des abgestrahlten Lichts, in jeder beliebigen Form kombinieren.

Zudem ermöglicht es die vorliegende Erfindung einem Benutzer, mittels einer "LadesäulenApplikation" für Laptop, Notebook, Tablet, Smartphone etc. ein individuelles Lichtmuster einzustellen, welches eine Ladesäule (100, 400), an welcher der Benutzer die Batterie seines Elektrofahrzeugs auflädt, zur visuellen Kommunikation des aktuellen Ladezustands der Batterie verwenden soll. Dadurch wird es dem Benutzer erleichtert, bereits von weiter Entfernung eindeutig festzustellen, ob die Batterie seines Elektrofahrzeugs voll aufgeladen ist.

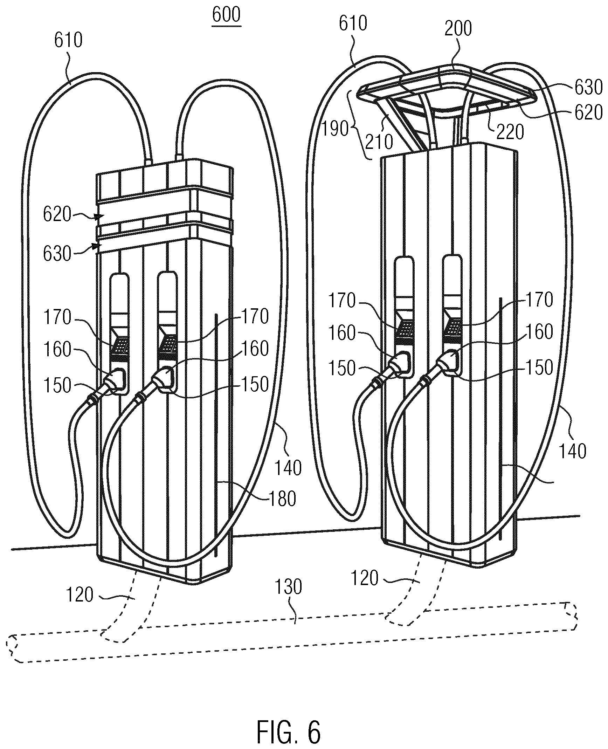

Figur 6 zeigt zwei Ladesäulen (600), welche sich von den zwei Ladesäulen (100, 400) der Figuren 1 und 4 dadurch unterscheiden, dass sie zwei Ladekabel (140, 610) zum gleichzeitigen Aufladen von zwei Batterien von zwei Elektrofahrzeugen aufweisen. Diese beiden Ladekabel (140, 610) treten wie in den in den Figuren 1 und 4 dargestellten Ladesäulen (100, 400) an der Oberseite aus und sind mittels je einem Stecker (150) mit Je einem Steckanschluss (160) auf einer Außenseite der Ladesäule (100, 400) verbunden. Im Falle derjenigen Ausführungsform der Ladesäule (100), bei welcher das geschlossene Lichtband (200) mit einer Halterung (190) auf der Oberseite der Ladesäule (100) angebracht ist, verlaufen nun beide Ladekabel (140, 610) durch die Öffnung in der Mitte des geschlossenen Lichtbands (200).

Entsprechend sind nun an einer oder an zwei verschiedenen Außenseiten der Ladesäulen (600) in räumlicher Nähe zu den beiden Steckanschlüssen (160) der beiden Ladekabel (140, 610) auch zwei HMIs (170) gemäß Figur 2 angebracht, welche Jeweils ein Kartenlesegerät (172), eine Tastatur (171) und einen Bildschirm (173) umfassen.

Ebenso weisen die in Figur 6 dargestellten Ladesäulen (600) auch zwei dünne, in vertikaler Richtung verlaufende Lichtleisten (180) auf, welche an einer oder an zwei verschiedenen Außenseiten der Ladesäulen (600) angebracht sind und die aktuellen Ladezustände der beiden Batterien der beiden Elektrofahrzeuge, welche gleichzeitig an den Ladesäulen (600) aufgeladen werden, anzeigen. Wie oben beschrieben, signalisieren diese Lichtleisten (180) die aktuellen Ladezustände der beiden Batterien der beiden Elektrofahrzeuge in einem Nahbereich um die Ladesäulen (600) durch Lichtabgabe entlang eines bestimmten Bruchteils ihrer gesamten Länge. Ein erfolgreicher Abschluss des Ladevorgangs einer der beiden Batterien, welche an den Ladesäulen (600) gemäß Figur 6 aufgeladen werden, wird dabei durch eine Lichtabgabe entlang der kompletten Länge der entsprechenden Lichtleiste (180) angezeigt.

Um die aktuellen Ladezustände der beiden Batterien der beiden Elektrofahrzeuge, welche gleichzeitig an den Ladesäulen (600) der Figur 6 aufgeladen werden, auch in einem weiteren Entfernungsradius von mehr als zehn Metern um die Ladesäulen (600) deutlich visuell zu kommunizieren, weisen die Ladesäulen (600) der Figur 6 jeweils zwei getrennte geschlossene Lichtbänder (620, 630) auf, weiche mittels einer in Figur 1 beschriebenen Halterung (190) auf der Oberseite der Ladesäule (100) parallel zum Boden oder alternativ wie in Figur 4 beschrieben außen im oberen Bereich der Ladesäule (400) ebenfalls parallel zum Boden angebracht sind. Diese beiden getrennten, geschlossenen Lichtbänder (620, 630) zeigen dann die aktuellen Ladezustände der beiden Batterien der beiden Elektrofahrzeuge, welche an den Ladesäulen (600) der Figur 6 aufgeladen werden, mittels zweier unterschiedlicher Farben auch in weiterer Entfernung von mindestens zehn Metern von den Ladesäulen (600) an.

Dabei können die beiden getrennten, geschlossenen Lichtbänder (620, 630), weiche an den Lichtsäuen (600) der Figur 6 angebracht sind, auch alle oben im Zusammenhang mit der Beschreibung von Figur 5 erwähnten weiteren Merkmale zur visuellen Kommunikation eines aktuellen Ladezustands einer Batterie eines Elektrofahrzeugs wie Erhöhung der Lichtstärke, Ändern der Umlaufgeschwindigkeit und der Blinkfrequenz des Lichts in den geschlossenen Lichtbändern (620, 630), sowie Ändern des Farbtons des abgestrahlten Lichts, in jeder beliebigen Form kombinieren.

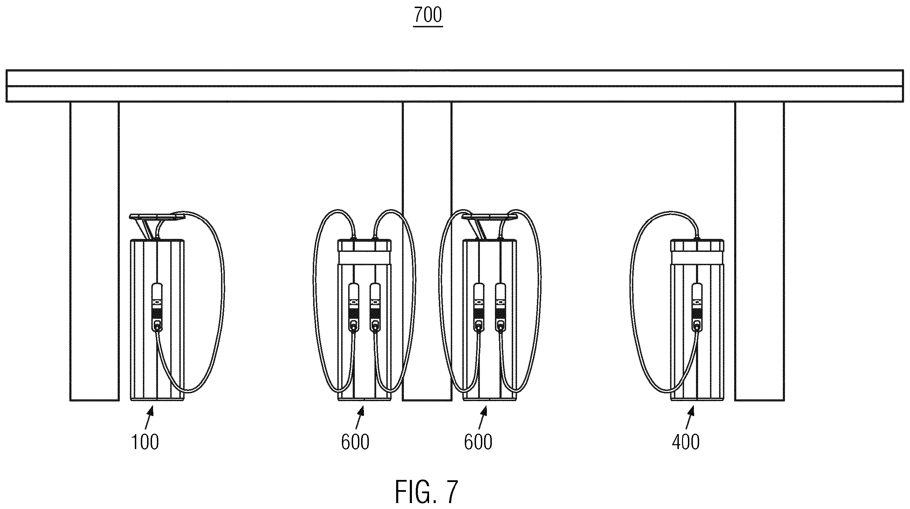

Aus Figur 7 wird ersichtlich, dass eine Vielzahl der Ladesäulen (100, 400, 600) zum Aufladen von Batterien von Elektrofahrzeugen, weiche in den Figuren 1,4 und 6 beschrieben wurden, in beliebiger Ausführungsform in Form einer sogenannten "Stromtankstelle" (700) angeordnet sein können. An einer derartigen Stromtankstelle (700) können folglich die Batterien einer Vielzahl von Elektrofahrzeugen zeitgleich aufgeladen werden, ähnlich wie eine Vielzahl von Autos mit Verbrennungsmotor an einer herkömmlichen Tankstelle zeitgleich betankt werden können.

## Patentansprüche

1. Ladesäule (100) zum Aufladen von Batterien von Elektrofahrzeugen, welche dazu eingerichtet ist, einen aktuellen Ladezustand einer Batterie, welche aufgeladen wird, zu kommunizieren, **dadurch gekennzeichnet, dass** eine äußere Schicht der Ladesäule (100) in hellem reflektierenden Material gehalten ist und als Reflektor genutzt wird und über der
Ladesäule (100) eine als geschlossenes Lichtband (200) ausgestaltete Lichtquelle (200)³ mittels einer Halterung (190) angebracht ist, und welche einer Form einer horizontalen
Querschnittsfläche der Ladesäule (100) angepasst ist und über die rechteckige, quadratische, runde oder ovale Querschnittsfläche der Ladesäule (100) in radialer Richtung hinausragt
und deren bevorzugte Abstrahlrichtung nach unten auf die Ladesäule (100) hin gerichtet ist, so dass ein von der Lichtquelle (200) abgegebenes Lichtsignal an der Ladesäule (100) reflektiert wird
und dadurch für einen weit entfernten Betrachter besser erkennbar ist, als wenn das Lichtsignal lediglich von der primären Lichtquelle (200) ausgeht.

2. Ladesäule (100) nach Anspruch 1, **dadurch gekennzeichnet, dass** das helle, reflektierende Material der Außenschicht weißer Lack ist.

3. Ladesäule (100) nach den Ansprüchen 1 und 2, **dadurch gekennzeichnet, dass** das geschlossene Lichtband (200, 410) umlaufendes, konstantes oder blinkendes Licht abgibt, wobei optional eine Farbe des von der Lichtquelle abgegebenen Lichts einstellbar und veränderbar ist.

4. Ladesäule (100) nach den Ansprüchen 1 bis 3, **dadurch gekennzeichnet, dass** sich eine Umlaufgeschwindigkeit, mit der das Licht im geschlossenen Lichtband (200) umläuft, eine Blinkfrequenz, mit der das geschlossene Lichtband (200) blinkt, und/oder eine Lichtstärke, mit der das Licht abgegeben wird, in Abhängigkeit des aktuellen Ladezustands der Batterie erhöht oder erniedrigt.

5. Ladesäule (100) nach den Ansprüchen 1 bis 4, **dadurch gekennzeichnet, dass** die Ladesäule (100) dazu eingerichtet ist, eine Komplettladung der Batterie durch einen Farbwechsel von weißem umlaufenden Licht zu günem konstantem Licht anzuzeigen.

6. Ladesäule (100) nach den Ansprüchen 1 bis 5, **dadurch gekennzeichnet, dass** ein Auftreten von technischen Problemen während eines Ladevorgangs durch einen Farbwechsel von weißem zu rotem Licht kenntlich gemacht wird und optional zusätzlich dadurch, dass gleichzeitig die Blink- oder Umlauffrequenz erhöht wird.

7. Ladesäule (100) nach den Ansprüchen 1 bis 6, **dadurch gekennzeichnet, dass** an einer Außenseite der Ladesäule (100) in vertikaler Richtung eine dünne Lichtleiste (180) angebracht ist, welche dazu ausgelegt ist, einen aktuellen Ladezustand der Batterie eines Elektrofahrzeugs, welches an der Ladesäule (100, 400) aufgeladen wird, durch Lichtabgabe anzuzeigen, und wobei
die an der Außenseite der Ladesäule (100) angebrachte Lichtleiste (180) dazu ausgelegt ist, eine Lichtabgabe über einen bestimmten Bruchteil ihrer Länge in Abhängigkeit des aktuellen Ladezustands der Batterie des Elektrofahrzeugs zu ermöglichen, wobei
die an der Außenseite der Ladesäule (100) angebrachte Lichtleiste (180) dazu ausgelegt ist, einen erfolgreichen Abschluss des Ladevorgangs der Batterie des Elektrofahrzeugs, welches an der Ladesäule (100) aufgeladen wird, durch eine Lichtabgabe entlang ihrer kompletten Länge anzuzeigen, und wobei
die an der Außenseite der Ladesäule (100) angebrachte Lichtleiste (180) nur in einem Nahbereich von maximal bis zu 10 Metern Entfernung ablesbar ist.

8. Ladesäule (100) nach den Ansprüchen 1 bis 7, **dadurch gekennzeichnet, dass** auf der Ladesäule (100) ein Human-Machine Interface, HMI, (170) mit integriertem Bildschirm (173) angebracht ist, welches ein Mittel zum bargeldlosen Abwickeln des Bezahlvorgangs und/oder zum Abspielen von Werbebotschaften auf dem integrierten Bildschirm (173) darstellt.

9. Ladesäule (100) nach den Ansprüchen 1 bis 8, **dadurch gekennzeichnet, dass** die Ladesäule (100) zwei Ladekabel (140, 610) zum gleichzeitigen Aufladen von zwei Batterien von zwei Elektrofahrzeugen aufweist,
dass an einer Außenseite der Ladesäule (100) zwei HMIs (170) angebracht sind, welche jeweils wie in Anspruch 8 definiert ausgestaltet sind, dass an einer Außenseite der Ladesäule (100) zwei dünne Lichtleisten (180), die jeweils wie in Anspruch 7 definiert ausgestaltet sind,
welche dazu ausgelegt sind, zwei aktuelle Ladezustände zweier Batterien zweier Elektrofahrzeuge anzuzeigen, welche an der Ladesäule (100) aufgeladen werden, und
dass das über der Ladesäule (100) angebrachte geschlossene Lichtband (200) als zwei getrennte Lichtbänder (620, 630) ausgestaltet ist, welche dazu ausgelegt sind, zwei aktuelle Ladezustände der zwei Batterien in zwei unterschiedlichen Farben gleichmäßig in alle Richtungen über größere Entfernungsradien visuell zu kommunizieren.

10. Stromtankstelle (700) zum Aufladen von Batterien von Elektrofahrzeugen, **dadurch gekennzeichnet, dass** sie eine Vielzahl von Ladesäulen (100, 400) gemäß der Ansprüche 1 bis 9 umfasst.

## Claims

1. Charging column (100) for charging batteries of electric vehicle, which is configured to communicate the current state of charge of a battery being charged, **characterized in that** an outer layer of the charging column (100) is made of a light-colored, reflective material and serves as a reflector, and a light source (200) configured as a closed light band (200) is mounted above the charging column (100) by means of a holder (190), and which is adapted to the shape of a horizontal cross-sectional area of the charging column (100) and extends radially beyond the rectangular, square, round, or oval cross-sectional area of the charging column (100), and whose preferred direction of radiation is downward toward the charging column (100), so that a light signal emitted by the light source (200) is reflected off the charging column (100) and is thereby more easily recognizable to a distant observer than if the light signal were emitted solely by the primary light source (200).

2. Charging column (100) according to claim 1, **characterized in that** the light-colored, reflective material of the outer layer is white varnish.

3. Charging column (100) according to claim 1 and 2, **characterized in that** the closed light band (200, 410) emits continuous, steady, or flashing light, wherein the color of the light emitted by the light source is optionally adjustable and changeable.

4. Charging column (100) according to claims 1 through 3, **characterized in that** the circumferential speed at which the light circulates in the closed light band (200), the flashing frequency at which the closed light band (200) flashes, and/or the luminous intensity at which the light is emitted are increased or decreased depending on the current state of charge of the battery.

5. Charging column (100) according to claims 1 through 4, **characterized in that** the charging column (100) is configured to indicate that the battery is fully charged by a color change from white rotating light to green steady light.

6. Charging column (100) according to claims 1 through 5, **characterized in that** the occurrence of technical problems during a charging process is indicated by a color change from white to red light and, optionally, additionally by simultaneously increasing the flashing or rotational frequency.

7. Charging column (100) according to claims 1 through 6, **characterized in that** a thin light strip (180) is mounted on an outer surface of the charging station (100) in a vertical direction, which is adapted to indicate the current charge status of the battery of an electric vehicle being charged at the charging column (100, 400) by emitting light, and wherein the light strip (180) mounted on the outer surface of the charging column (100) is configured to enable light emission over a specific portion of its length depending on the current charge status of the battery of the electric vehicle, wherein the light strip (180) mounted on the outer surface of the charging column (100) is adapted to indicate the successful completion of the charging process for the battery of the electric vehicle being charged at the charging column (100) by emitting light along its entire length, and wherein the light strip (180) mounted on the outer surface of the charging column (100) is only visible within a close range of no more than 10 meters.

8. Charging column (100) according to claims 1 through 7, **characterized in that** a human-machine interface, HMI (170) with an integrated screen (173) is mounted on the charging column (100), which serves as a means for cashless payment processing and/or for displaying advertising messages on the integrated screen (173).

9. Charging column (100) according to claims 1 through 8, **characterized in that** the charging column (100) comprises two charging cables (140, 610) for simultaneously charging two batteries of two electric vehicles, and that two HMIs (170) are mounted on the outer surface of the charging column (100), each of which is configured as defined in claim 8; that two thin light strips (180), each of which is configured as defined in claim 7, are mounted on an outer surface of the charging column (100), which are adapted to display the current charging states of two batteries of two electric vehicles connected to the charging column (100), and that the closed light strip (200) mounted above the charging column (100) is configured as two separate light strips (620, 630), which are adapted to visually communicate two current light states of the two batteries in two different colors uniformly in all directions over large distance radii.

10. Charging station (700) for charging batteries of electric vehicles, **characterized in that** it comprises a plurality of charging columns (100, 400) according to claims 1 through 9.

## Revendications

1. Colonne de charge (100) permettant de charger des batteries de véhicules électriques et conçue pour communiquer un état de charge actuel d'une batterie à charger, **caractérisée en ce qu'**une couche extérieure de la colonne de charge (100) est retenue dans un matériau réfléchissant clair et est utilisée comme réflecteur, et **en ce qu'**au-dessus de la colonne de charge (100) est installée, au moyen d'un support (190), une source de lumière (200) sous forme d'une rampe lumineuse fermée (200) qui est adaptée à la forme d'une surface de section transversale horizontale de la colonne de charge (100) et qui fait saillie dans une direction radiale au-delà de la surface de section transversale rectangulaire, carrée, ronde ou ovale de la colonne de charge (100) et dont la direction de rayonnement préférée est dirigée vers le bas vers la colonne de charge (100), de sorte qu'un signal lumineux émis par la source de lumière (200) est réfléchi au niveau de la colonne de charge (100) et peut être ainsi plus facilement identifié par un observateur éloigné que lorsque le signal lumineux provient uniquement de la source de lumière primaire (200).

2. Colonne de charge (100) selon la revendication 1, **caractérisée en ce que** le matériau réfléchissant clair de la couche extérieure est un vernis blanc.

3. Colonne de charge (100) selon l'une quelconque des revendications 1 et 2, **caractérisée en ce que** la rampe lumineuse fermée (200, 410) émet une lumière défilante, constante ou clignotante, dans laquelle une couleur de la lumière émise par la source de lumière peut être réglée et modifiée en option.

4. Colonne de charge (100) selon l'une quelconque des revendications 1 à 3, **caractérisée en ce qu'**une vitesse de défilement à laquelle la lumière défile dans la rampe lumineuse fermée (200), une fréquence de clignotement à laquelle la rampe lumineuse fermée (200) clignote et/ou une intensité lumineuse à laquelle la lumière est émise, augmente(nt) ou diminue(nt) en fonction de l'état de charge actuel de la batterie.

5. Colonne de charge (100) selon l'une quelconque des revendications 1 à 4, **caractérisée en ce que** la colonne de charge (100) est conçue pour indiquer une charge complète de la batterie par un changement de couleur passant d'une lumière blanche défilante à une lumière verte constante.

6. Colonne de charge (100) selon l'une quelconque des revendications 1 à 5, **caractérisée en ce que** l'apparition de problèmes techniques pendant un processus de charge est signalée par un changement de couleur passant d'une lumière blanche à une lumière rouge et, en option, de manière supplémentaire par l'augmentation simultanée de la fréquence de clignotement ou de défilement.

7. Colonne de charge (100) selon l'une quelconque des revendications 1 à 6, **caractérisée en ce qu'**une bande lumineuse mince (180) est installée sur un côté extérieur de la colonne de charge (100) dans la direction verticale, laquelle bande lumineuse est conçue pour indiquer par émission de lumière un état de charge actuel de la batterie d'un véhicule électrique en charge sur la colonne de charge (100, 400), et dans laquelle la bande lumineuse (180) installée sur le côté extérieur de la colonne de charge (100) est conçue pour permettre une émission de lumière sur une certaine fraction de sa longueur en fonction de l'état de charge actuel de la batterie du véhicule électrique, dans laquelle la bande lumineuse (180) installée sur le côté extérieur de la colonne de charge (100) est conçue pour indiquer une fin réussie de l'opération de charge de la batterie du véhicule électrique en charge sur la colonne de charge (100) par une émission de lumière sur toute sa longueur, et dans laquelle la bande lumineuse (180) installée sur le côté extérieur de la colonne de charge (100) ne peut être observée que dans une région de proximité allant jusqu'à une distance maximale de 10 mètres.

8. Colonne de charge (100) selon l'une quelconque des revendications 1 à 7, **caractérisée en ce qu'**une interface homme-machine, IHM, (170) avec écran intégré (173) est installée sur la colonne de charge (100), laquelle interface comprend un moyen permettant la mise en œuvre sans espèces de l'opération de paiement et/ou permettant la lecture de messages publicitaires sur l'écran intégré (173).

9. Colonne de charge (100) selon l'une quelconque des revendications 1 à 8, **caractérisée en ce que** la colonne de charge (100) présente deux câbles de charge (140, 610) permettant de charger simultanément deux batteries de deux véhicules électriques,
**en ce que** deux IHM (170) respectivement conçues comme défini dans la revendication 8 sont installées sur un côté extérieur de la colonne de charge (100). **en ce que** deux bandes lumineuses minces (180) présentes sur un côté extérieur de la colonne de charge (100) et respectivement réalisées comme défini dans la revendication 7 sont conçues pour indiquer deux états de charge actuels de deux batteries de deux véhicules électriques en charge sur la colonne de charge (100), et **en ce que** la rampe lumineuse fermée (200) installée au-dessus de la colonne de charge (100) est réalisée sous la forme de deux rampes lumineuses (620, 630) séparées qui sont conçues pour communiquer visuellement deux états de charge actuels des deux batteries de manière uniforme dans toutes les directions sur de plus grands rayons de distance et dans deux couleurs différentes.

10. Station de recharge électrique (700) permettant de recharger des batteries de véhicules électriques, **caractérisée en ce qu'**elle comprend une pluralité de colonnes de charge (100, 400) selon l'une quelconque des revendications 1 à 9.
